# EUROPÄISCHE PATENTSCHRIFT

(11) **EP 3 092 895 B1**
(45) Veröffentlichungstag und Bekanntmachung des Hinweises auf die Patenterteilung: **16.02.2022**
(21) Anmeldenummer: 16169010.2
(22) Anmeldetag: 10.05.2016
(51) Int. Cl.: A01M 1/02, A01M 1/04, A01M 1/10

(54) **ANORDNUNG ZUM ANLOCKEN VON INSEKTEN**
SYSTEM FOR ATTRACTING INSECTS
SYSTÈME DESTINÉ À APPATER LES INSECTES

(30) Priorität: 11.05.2015 AT 2912015
(43) Veröffentlichungstag der Anmeldung: 16.11.2016
(73) Patentinhaber: Witasek, Peter, 9560 Feldkirchen (AT)
(72) Erfinder: Witasek, Peter, 9560 Feldkirchen (AT)
(74) Vertreter: Beer & Partner Patentanwälte KG

(56) Entgegenhaltungen:
- EP-A1- 2 759 198
- WO-A1-2014/107753
- DE-A1- 4 410 170
- US-A1- 2011 289 822

## Beschreibung

Die Erfindung betrifft eine Anordnung zum Anlocken von Insekten mit den Merkmalen des einleitenden Teils von Anspruch 1 (WO 2014/107753 A).

Für das Anlocken und insbesondere Fangen sowie gegebenenfalls Töten von Insekten sind verschiedene Einrichtungen und Fallen ("Insektenfallen") bekannt. Unter bekannten Fallen sind als Beispiele zu nennen Schlitzfallen, Borkenkäfer-Schlitzfallen, Trocken- oder Nass-Fallen mit Prallflächen, Segmenttrichterfallen, Fallenlampions, Klebefallen mit dreiseitigem, klebrigen Prisma, Flügelfallen-Klebefallen und Insektenfallen mit pyramidenförmigem Netz.

Um das Anlocken von Insekten zu verbessern, werden bekannten Fallen häufig Botenstoffe (Semiochemikalien, wie z.B. Pheromone) zugeordnet.

Problematisch ist es, dass Botenstoffe alleine nicht genügen, um mit bekannten Fallen Insekten hinreichend wirksam anzulocken.

Es ist zum Verbessern der Insekten anlockenden Wirkung schon vorgeschlagen worden, elektromagnetische Strahlung abgebende Quellen zu verwenden.

Die WO 2006/121346 A beschreibt eine Insektenfalle mit "Anlockeinrichtung", die eine im Inneren der Falle angeordnete IR-Quelle aufweist. So sollen Insekten in einen Bereich der Falle gelockt werden, aus dem sie nicht wieder heraus können. Die IR-Quelle kann eine Heizeinrichtung oder eine LED sein. Vorzugsweise sind mehrere IR-Quellen vorgesehen, die IR-Strahlung veränderlich abgeben. Die IR-Quelle kann mit einer Lichtquelle, insbesondere für UV-Licht oder sichtbares Licht, kombiniert sein.

Aus der gattungsbildenden WO 2014/107753 A ist eine Anordnung zum Anlocken von Insekten bekannt. Die bekannte Anordnung umfasst eine Insektenfalle, die mit einem Botenstoff (Semiochemikalie, wie z.B. Pheromone) bestückt ist. Der Insektenfalle ist wenigstens eine Quelle für Insekten anlockende, elektromagnetische Strahlung, insbesondere Infrarot-Strahlung, Wärmestrahlung und/oder Ultraviolett-Strahlung derart zugeordnet, dass die an die Insektenfalle gerichtete Strahlung von Reflexionsflächen reflektiert wird. Dadurch werden Insekten verstärkt angelockt und können gefangen werden.

Problematisch bei den bekannten Lockvorrichtungen ist es, dass sie für den Betrieb der Strahlungsquellen elektrische Energie benötigen.

EP 2 759 198 A1 zeigt und beschreibt eine Insektenfalle, die durch Abstrahlen von Licht mit unterschiedlichen Wellenlängen in Verbindung mit einer Kante zwischen den Licht mit unterschiedlichen Wellenlängen abstrahlenden Bereichen Insekten anlocken soll. Hierzu verwendet die bekannte Insektenfalle aneinandergrenzende Platten, die von hinten mit Licht angestrahlt werden und nach vorne Licht mit unterschiedlichen Wellenlängen (370nm-violett und 520nm-grün) abgeben. EP 2 759 198 A1 erwähnt auch, dass Stinkkäfer von Tuchstücken mit grüner Farbe angelockt werden. Bestimmte Reflexionseigenschaften der bekannten Insektenfalle erwähnt EP 2 759 198 A1 nicht.

Aus DE 44 10 170 A1 ist eine Lockstoff-Falle für Borkenkäfer bekannt, die einen Hohlkörper aus zwei Lagen aufweist. Die äußere Lage soll aus grobfaserigem, aufgerautem Werkstoff bestehen, um den durch den Lockstoff angelockten Borkenkäfern das Landen auf der Falle zu erleichtern. DE 44 10 170 A1 erwähnt, dass die Farbe der Falle braun bis schwarz ist. Dies allerdings ohne einen Hinweis darauf, ob die Farbe Borkenkäfer anlockt.

Der Erfindung liegt die Aufgabe zugrunde, eine Anordnung der eingangs genannten Gattung vorzustellen, mit der das Anlocken von Insekten und in weiterer Folge beispielsweise das Fangen und/oder Töten derselben in Fallen verbessert wird.

Gelöst wird diese Aufgabe erfindungsgemäß mit einer Anordnung, welche die Merkmale von Anspruch 1 aufweist.

Bevorzugte und vorteilhafte Ausgestaltungen der Erfindung sind Gegenstand der Unteransprüche.

Mit der Erfindung ist es gelungen, die Eigenschaften (Parameter) von gattungsgemäßen Einrichtungen, ganz gleich, ob es sich um eine Insektenfalle oder eine Einrichtung mit einem pyramidenförmigen Netz handelt, so abzuändern, dass Insekten verstärkt und sicher angelockt werden. Ein wesentliches Merkmal der erfindungsgemäßen Anordnung ist es, dass die Einrichtung oder die Insektenfalle wenigstens einen reflektierenden Bereich (Reflexionsfläche) aufweist, der Sonnenlicht so reflektiert wie der Wirt, der von dem Insekt als Schädling befallen wird. Beispielsweise ist der Wirt ein Baum, in welchem Fall das Reflexionsspektrum des wenigstens einen Bereiches (Reflexionsfläche) der erfindungsgemäßen Anordnung so gewählt wird, dass es dem Reflexionsspektrum des Wirtes, z.B. des Baumes, der von dem Insekt befallen wird, möglichst nahe kommt.

Wenn die erfindungsgemäß ausgebildete Anordnung gemäß einer möglichen Ausführungsform mit einem für das anzulockende und/oder zu tötende Insekt spezifischen Pheromon (Semiochemikalie) kombiniert ist, ergibt sich eine besonders gute Wirkung und Effektivität der erfindungsgemäßen Anordnung. Wenngleich die erfindungsgemäße Anordnung ohne eigene Lichtquelle eine hohe Wirksamkeit beim Anlocken von Insekten zeigt, kann die Wirksamkeit durch eine der Anordnung zugeordnete Lichtquelle weiter erhöht werden. Die Lichtquelle kann eine Lichtquelle sein, die Licht abgibt, das Sonnenlicht im Wesentlichen entspricht, oder aber Licht in einer Wellenlänge abgibt, die für sich eine Insekten anlockende Wirkung zeigt, wie dies beispielsweise aus der WO 2014/107753 A bekannt ist.

Bei der Erfindung kann die Anordnung zur Gänze eine Oberfläche aufweisen, die das erfindungsgemäß ausgewählte Reflexionsspektrum (Reflexionsmuster) aufweist, also insektenspezifisch reflektierend ist, oder aber es sind ausgewählte Bereiche der Anordnung als insektenspezifische Reflexionsflächen ausgebildet, was den Vorteil hat, dass für die übrige Konstruktion der Anordnung übliche Werkstoffe verwendet werden können.

Anders als bei den bekannten Anordnungen der eingangs genannten Gattung ist eine elektromagnetische Strahlung abgebende Quelle bei der erfindungsgemäßen Anordnung nicht mehr zwingend erforderlich, da die erfindungsgemäße Anordnung zum Anlocken von Insekten auch ohne Strahlungsquellen wirksam ist.

Die Erfindung erlaubt in einer Ausführungsform das Anlocken von Insekten (wie z.B. Borkenkäfer) mit Botenstoffen (Semiochemikalien bzw. Pheromone, Allelochemikalien, Kairomone, Allomone), die auf die Insekten anlockend wirken (wie oben beschrieben), ergänzt um wenigstens einen Bereich der Anordnung, der die Lockwirkung auf die Insekten (und damit je nach Anwendung, den Fang im Fallensystem oder die Wirkung von attract-and-kill) durch sein spezielles, nämlich insektenspezifisches Reflexionsspektrum deutlich erhöht.

Die Erfindung kann in allen Kombinationen mit anderen Systemen, die Insekten anlocken, eingesetzt werden.

Dabei handelt es sich in einer Ausführungsform um ein symbiotisches System, bei dem das Zusammenspiel von Botenstoff (Semiochemikalie) und der erfindungsgemäßen Reflexionsfläche die Anlockwirkung deutlich erhöht.

Die erfindungsgemäße Anordnung kann eine Quelle aufweisen, die elektromagnetische Strahlung (Licht) abgibt. Dabei ist es bevorzugt, dass die Strahlung auf den Bereich der Anordnung gerichtet ist, der in einem insektenrelevanten Spektrum reflektierend ausgebildet ist.

Weitere Einzelheiten, Merkmale und Vorteile der Erfindung ergeben sich aus der nachstehenden Beschreibung bevorzugter Ausführungsbeispiele, in der auf die schematischen Zeichnungen Bezug genommen wird. Es zeigt:
- Fig. 1: eine erfindungsgemäße Anordnung mit einer Schlitzfalle,
- Fig. 2: eine Einrichtung zum Anlocken und Töten von Insekten mit einem pyramidenförmigen Netz,
- Fig. 3: eine mit Prallflächen ausgebildete Nassfalle für Borkenkäfer,
- Fig. 4: eine Segmenttrichterfalle,
- Fig. 5: eine im Wesentlichen als dreiseitiges Prisma ausgebildete Klebefalle,
- Fig. 6: eine Flügelfalle-Klebefalle,
- Fig. 7: eine Prallfalle,
- Fig. 8: eine Lampionfalle und die
- Fig. 9bis 12: verschiedene Reflexionsspektren.

Bei allen nachstehend beschriebenen Ausführungsbeispielen einer erfindungsgemäßen Anordnung ist in den Insektenfallen oder Einrichtungen zum Anlocken und Töten von Insekten bevorzugt wenigstens ein Botenstoff (Semiochemikalie, wie z.B. ein insektenspezifisches Pheromon) zum Anlocken der Insekten vorgesehen. Weiters können einer erfindungsgemäßen Anordnung bei allen Ausführungsbeispielen elektromagnetische Strahlung (z.B. Licht) abgebende Quellen zugeordnet sein. Derartige Quellen sind aber bei der erfindungsgemäßen Anordnung nicht zwingend.

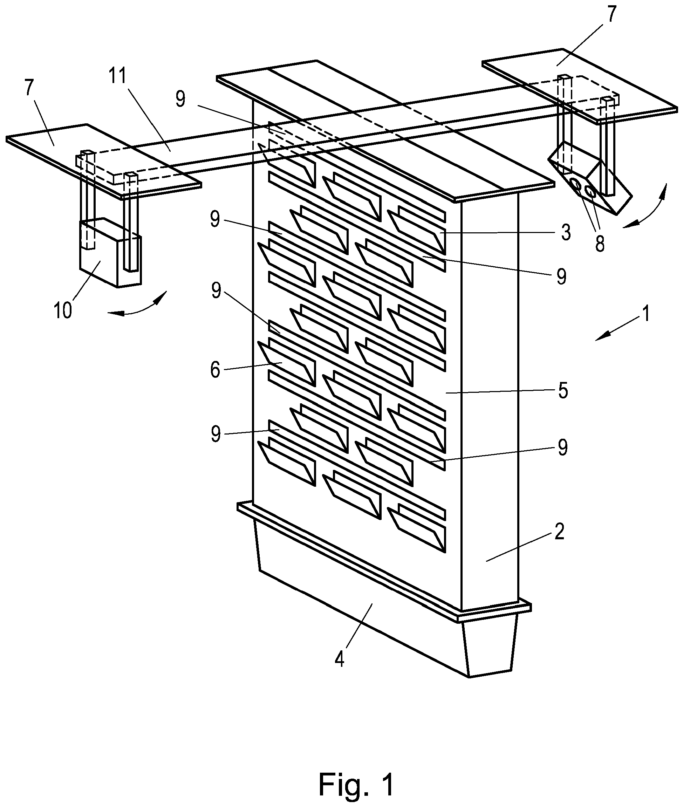

In Figur 1 ist eine an sich bekannte Schlitzfalle 1, insbesondere eine Schlitzfalle für das Fangen von Borkenkäfern, gezeigt. Die Schlitzfalle 1 besitzt einen Grundkörper 2 mit Schlitzen 3, durch die Borkenkäfer in das Innere der Schlitzfalle 1 gelangen, und am unteren Ende einen abnehmbaren Behälter 4, in den die Borkenkäfer fallen und dort gesammelt werden. Im Einzelnen besteht die Schlitzfalle 1 aus der eigentlichen Falle, die ein kastenförmiger Bauteil mit Schlitzen 3 in den Seitenwänden 5 und mit zu den Seitenwänden 5 schräg nach oben weisenden Laschen 6 ist. Am unteren Ende der Schlitzfalle 1 wird in Nuten ein Trichter eingeschoben, unter dem der Behälter 4 angeordnet wird, der ebenfalls in die Nuten eingeschoben sein kann.

Der Grundkörper 2 der Schlitzfalle 1 ist aus einem Werkstoff gebildet oder wenigstens mit einem solchen Werkstoff beschichtet, der ein Reflexionsspektrum (Reflexionsmuster) aufweist, das so gewählt ist, dass die Reflexion von Licht, insbesondere von Sonnenlicht, eine Anlockwirkung auf Insekten ausübt.

Dabei ist es nicht erforderlich, dass die gesamte äußere Fläche der Schlitzfalle 1 insektenspezifisch reflektierend ausgebildet ist, sondern es genügt, wenn einzelne Bereiche mit Reflexionsflächen ausgestattet sind, welche Sonnenlicht derart reflektieren, dass Insekten angelockt werden.

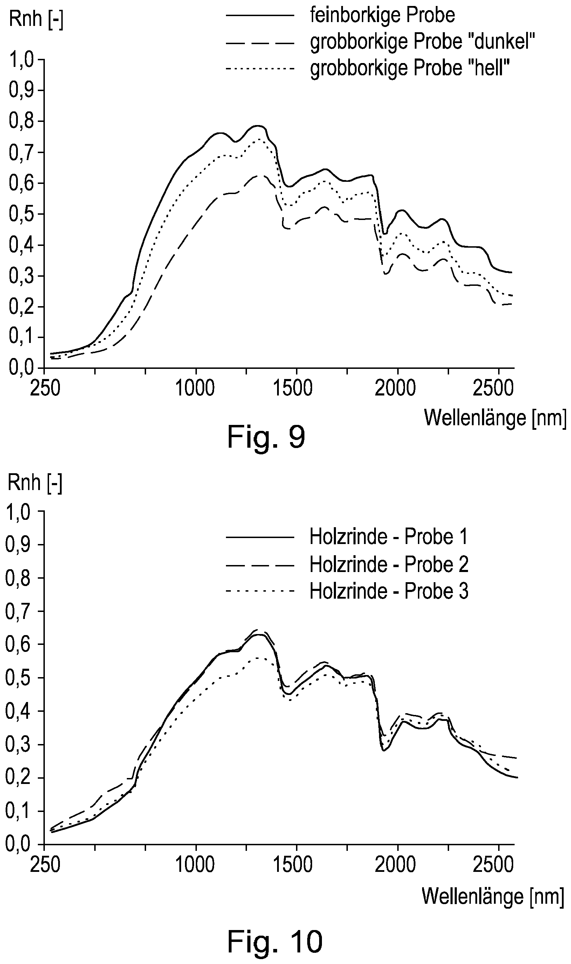

In Fig. 9 sind in einem Diagramm Reflexionsmuster von Baumrinde, z.B. Rindenproben von Fichten, mit unterschiedlicher Struktur und unterschiedlicher Farbe (dünnborkig, grobborkig) wiedergegeben. Es ist erkennbar, dass die Kurven sowohl für feinborkige Probe, für grobborkige Probe dunkel und für grobborkige Probe hell sehr ähnlich sind. Dies zeigt, dass nicht nur die Oberflächenstruktur, sondern auch die Farbe einen Einfluss auf den Verlauf der Kurven haben.

In Fig. 10 sind Reflexionsspektren von Proben von Bäumen aus unterschiedlichen Vitalitätsklassen, nämlich Rindenproben aus einem völlig gesunden, einem frisch von Borkenkäfern befallenen und einem bereits abgestorbenen Baum wiedergegeben. Es ist erkennbar, dass die Kurve 1 "gesunder Baum", die Kurve 2 "frisch befallener Baum" und die Kurve 3 "abgestorbener Baum" nahezu identisch sind.

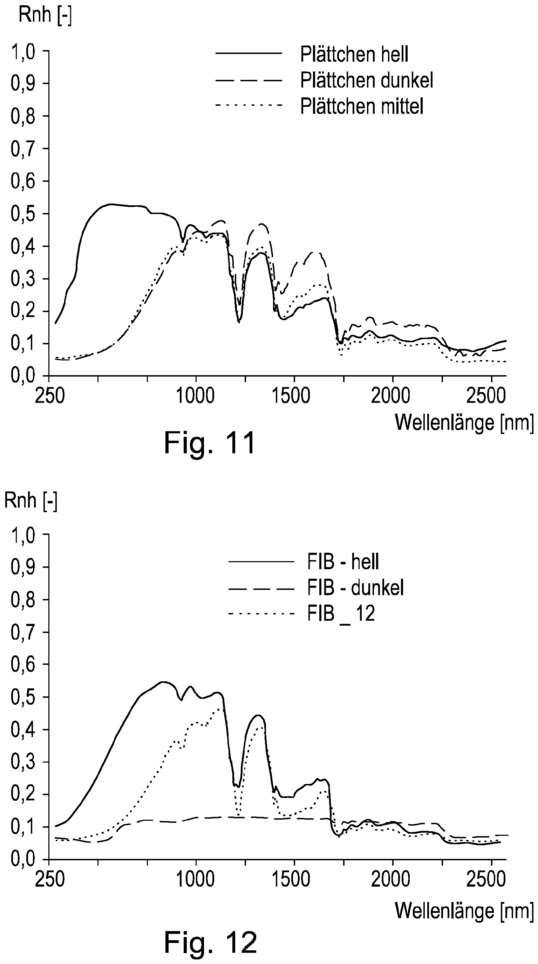

In den Fig. 11 und 12 sind Reflexionsspektren von Werkstoffen gezeigt, die erfindungsgemäß bei Anordnungen zum Anlocken von Insekten eingesetzt werden, wobei die nach außen weisenden Teile der Anordnung entweder zur Gänze aus diesem Werkstoff bestehen oder Reflexionsflächen aufweisen, die aus diesen Werkstoffen hergestellt sind.

Fig. 11 zeigt drei Kurven, und zwar "Plättchen hell", "Plättchen dunkel" und "Plättchen mittel" und die Fig. 12 zeigt einen Verlauf des Reflexionsspektrum von "FIB-hell" und von "FIBdunkel".

Es ist erkennbar, dass die Reflexionsspektren der Fig. 11 und das Reflexionsspektrum der Probe FIB-hell von Fig. 12 dem Reflexionsspektrum Baumrinde, wie es in den Fig. 9 und 10 gezeigt ist, sehr ähnlich ist.

Insbesondere liegt ein Reflexionsmaximum im Bereich von ungefähr 50 nm und ein weiteres im Bereich von etwa 1300 nm.

Versuche mit einer Insektenfalle 1 gemäß Fig. 9, die bereichsweise, z.B. im Bereich von Flächen 9, mit dem Werkstoff FIB-hell beschichtet ist, zeigte erhöhte Anlockwirkung auf Borkenkäfer (Ips typographus, Pityogenes chalcographus).

Dies bedeutet, dass mit einer erfindungsgemäß ausgebildeten Anordnung, beispielsweise einer Schlitzfalle 1 gemäß Fig. 9, deren Außenflächen wenigstens bereichsweise ein Reflexionsspektrum haben wie der Stoff FIB-hell, das Anlocken von Borkenkäfern besonders erfolgreich ist.

Die untersuchten Stoffe hatten die folgende Zusammensetzung:
Fig. 9
   - feinborkige Probe: Rinde eines Fichtenbaumes
   - grobborkige Probe "dunkel": Rinde eines Fichtenbaumes
   - grobborkige Probe "hell": Rinde eines Fichtenbaumes
Fig. 10
   - Holzrinde - Probe 1: Rinde eines gesunden Fichtenbaumes
   - Holzrinde - Probe 2: Rinde eines frisch mit Borkenkäfer befallenen Fichtenbaumes
   - Holzrinde - Probe 3: Rinde eines bereits abgestorbenen Fichtenbaumes
Fig. 11
   - Plättchen hell: Kunststoff mit biogenen Füllstoffen
   - Plättchen dunkel: Kunststoff mit biogenen Füllstoffen
   - Plättchen mittel: Kunststoff mit biogenen Füllstoffen
Fig. 12
   - FIB - hell: Polyethylen enthaltend Zellulosefasern
   - FIB - dunkel: Polyethylen enthaltend Zellulosefasern und Farbstoffgemisch
   - FIB _ 12: Polyethylen enthaltend Zellulosefasern und Lignin

Im Ausführungsbeispiel ist die in Fig. 1 gezeigte Schlitzfalle 1 mit zwei Quellen 10 für Licht ausgestattet. Diese Quellen 10 sind so angeordnet, dass die Strahlung (Licht) auf den Grundkörper 2 trifft und von diesem insektenspezifisch reflektiert werden, sodass Insekten, insbesondere Borkenkäfer, verstärkt angelockt werden und in die Schlitzfalle 1 gelangen.

Die insektenspezifische Reflexion (Reflexionsspektrum) von wenigstens einem Bereich einer Insektenfalle, beispielsweise der Insektenfalle 1 von Fig. 1, entspricht also im Wesentlichen dem Reflexionsspektrum eines Wirtes der anzulockenden Insekten. Solche Wirte können Bäume, Teile von Bäumen, wie Blätter und Nadeln, aber auch das Fell von Tieren sein.

Entscheidend ist jedenfalls, dass wenigstens ein Bereich der erfindungsgemäßen Anordnung ein Reflexionsspektrum aufweist, das dem Reflexionsspektrum eines arteigenen Wirtes des anzulockenden Insekts entspricht. Die Anordnung ist also wenigstens in einem Bereich insektenspezifisch reflektierend ausgebildet.

Die Quellen 10 sind an einem horizontalen Träger 11 über nach unten weisende Stäbe 12 verschwenkbar gehalten, sodass sie für ein optimales Anstrahlen der Schlitzfalle 1 ausgerichtet (geschwenkt) werden können. Zum Schutz vor Niederschlag kann am Träger 11 über den Quellen 10 ein Schutzdach 7 vorgesehen sein.

Jede der elektromagnetische Strahlung abgebenden Quellen 10 ist im Ausführungsbeispiel mit mehreren LEDs 8 bestückt, die voneinander unabhängig aktiviert werden können.

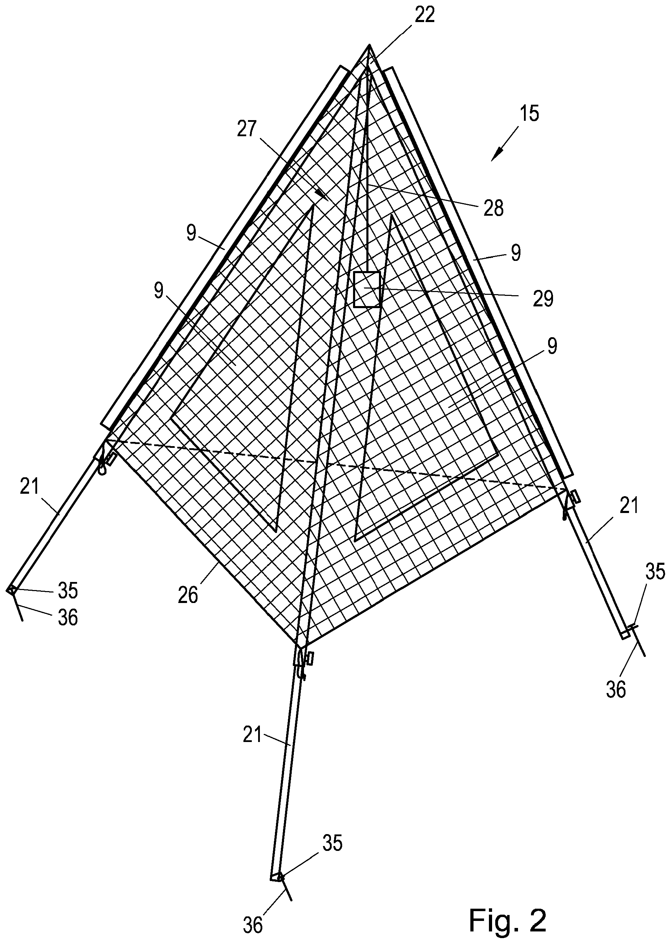

Am Grundkörper 2 der Insektenfalle 1 können Platten angeordnet sein, die insektenspzifisch reflektierend ausgebildet sind. Solche Flächen 9 (Platten) sind bei der in Fig. 1 und bei den in den Fig. 2 bis 8 gezeigten Einrichtungen zum Anlocken von Insekten (z.B. Insektenfallen) vorgesehen, wenn die Einrichtung selbst nicht insektenspezifisch reflektierend ausgebildet ist.

Im Rahmen der Erfindung ist in Betracht gezogen, dass die Versorgung der elektromagnetische Strahlung (Licht) abgebenden Quellen 10 mit elektrischer Energie durch Stromspeicher, wie Batterien oder Akkumulatoren, durch Photovoltaik-Elemente, die gegebenenfalls die Stromspeicher aufladen, oder durch eine externe Stromversorgung erfolgt. Im Falle einer externen Stromversorgung kann vorgesehen sein, dass die erfindungsgemäße Anordnung über Netzgeräte und/oder Stromwandler an ein Stromnetz angeschlossen ist.

In den Fig. 2 bis 8 sind mögliche Ausführungsbeispiele für Insekten anlockende und gegebenenfalls tötende Einrichtungen ("Insektenfallen") gezeigt, die mit Platten 9 (als Reflexionsflächen) ausgestattet sind, deren Reflexionsspektrum jenen von Wirten der anzulockenden Insekten möglichst nahe kommt, die also insektenspezifisch reflektierend sind, um erfindungsgemäße Anordnungen zu bilden.

Die in Fig. 2 gezeigte Ausführungsform einer erfindungsgemäßen Einrichtung 15 zum Anlocken und Töten von Insekten umfasst ein Dreibeingestell, über das ein Netz mit Form einer dreiseitigen Pyramide angeordnet ist. Innerhalb des Netzes ist ein Botenstoff 29 (Semiochemikalie, wie z.B. Pheromone) angeordnet, um Insekten anzulocken.

Im Einzelnen kann die Einrichtung 15 von Fig. 2 wie folgt ausgebildet sein:
Die in Fig. 2 dargestellte Ausführungsform der Einrichtung 15 weist ein Gestell aus drei Streben oder Stehern 21 auf, die in einem von einem Formstück 22 gebildeten Knoten miteinander verbunden sind.

Das Formstück 22 besteht im dargestellten Ausführungsbeispiel aus drei Rohren, die an einem Ende miteinander verbunden sind. Das Formstück 22 kann beispielsweise ein Spritzguss-Teil aus Kunststoff oder aus Metall sein. Die Steher 21 sind in die Rohre des Formstückes 22 gesteckt und mit Hilfe von Schrauben festgeklemmt.

Die drei durch das Formstück 22 miteinander verbundenen Steher 21 sind mit einer, im dargestellten Ausführungsbeispiel von einem Netz gebildeten, Umhüllung 26 umgeben, wodurch ein Innenraum 27 geschaffen wird, der nach unten zum Boden hin offen ist. Die Umhüllung 26 erstreckt sich im dargestellten Ausführungsbeispiel über etwa 2/3 der Länge der Steher 21 nach unten. Das Netz der Umhüllung 26 ist mit einem Schädlingsbekämpfungsmittel präpariert, das beispielsweise eine insektizide Wirkung aufweist, so dass die zu bekämpfenden Insekten, wenn sie mit dem Netz der Umhüllung 26 in Berührung kommen, verenden.

Im Innenraum 27 der Umhüllung 26 ist an einer Schnur 28 (oder einem Haken) ein Botenstoff (Semiochemikalie, wie z.B. Pheromon) 29 aufgehängt. Am Formstück 22 ist im Bereich des oberen Endes ein Haken angebracht, in den die Schnur 28 eingehängt werden kann. Der Botenstoff 29 lockt Insekten an, damit diese mit dem Netz der Umhüllung 26 und dem daran angebrachten Wirkstoff in Berührung kommen. Wenn die Insekten unter dem Netz der Umhüllung 26 durchfliegen und in den Innenraum 27 gelangen, werden sie ebenfalls früher oder später mit dem präparierten Netz der Umhüllung 26 in Berührung kommen, wodurch die erwünschte Wirkung eintreten wird.

Die Steher 21 können, wie in Fig. 2 zu sehen ist, jeweils aus zwei teleskopartig ineinander-schiebbaren Rohren zusammengebaut sein, wobei das untere Rohr in das obere Rohr hineingesteckt wird und dort mit Hilfe einer Flügelschraube festgeklemmt werden kann. Dadurch ist es möglich, die Länge der Steher 21 den jeweiligen Umgebungsbedingungen (geneigtes oder unebenes Gelände) bzw. Wünschen anzupassen.

Die Abmessungen des Netzes der Umhüllung 26 und des oberen Rohres sind so aufeinander abgestimmt, dass das Netz der Umhüllung 26 knapp oberhalb der Schraube oder der Flügelschraube endet. Am unteren Rand des Netzes der Umhüllung 26 sind im Bereich der Steher 21 Schnüre oder dergleichen angebracht, mit denen das Netz der Umhüllung 26 nach unten gespannt und an den Schrauben festgebunden werden kann.

An den unteren, bodennahen Enden der Steher 21 sind Ösen 35 angebracht, beispielsweise angeschweißt oder angeschraubt, durch die Erdnägel 36, Heringe oder dergleichen gesteckt werden können, um die Steher 21 und somit das Gestell im Boden zu verankern.

Das Anlocken von Insekten ist bei dem in Fig. 2 gezeigten Ausführungsbeispiel einer Einrichtung 15 dadurch verstärkt, dass an einer, zwei oder allen drei Seiten des Netzes 26 und/oder im Bereich wenigstens eines Stehers 21 Insekten anlockende, insektenspezifisch reflektierende Flächen 9 angeordnet sind. Diese Flächen 9 sind im einfachsten Fall Infrarot-Strahlung reflektierende Platten.

Die insektenspezifisch reflektierenden Flächen 9 können etwa die Größe und Form der Seitenflächen der Umhüllung 26 haben und sind bevorzugt im Innenraum 7 der Einrichtung 15 (also innerhalb der Umhüllung 26) angeordnet. Dabei können insektenspezifisch reflektierende Flächen 9 bildende Platten einer, zwei oder allen drei Seitenflächen der Umhüllung 26 zugeordnet sein.

Im Übrigen kann bei der in Fig. 2 gezeigten Ausführungsform die Quelle 10 für elektromagnetische Strahlung (Licht) so angeordnet, ausgebildet, betrieben und mit Energie beaufschlagt sein, wie dies im Zusammenhang mit Fig. 1 beschrieben worden ist.

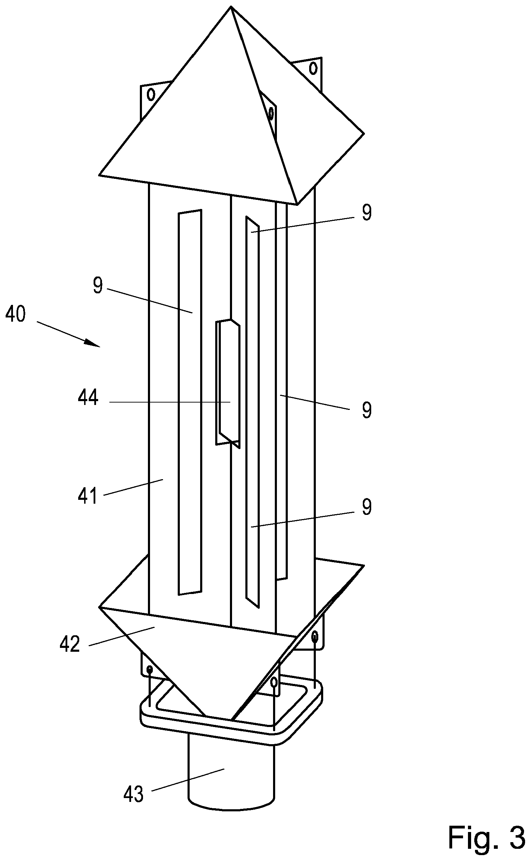

In Fig.3 ist eine Borkenkäfer-Nass-Falle 40 mit sternförmig angeordneten Prallflächen 41 gezeigt. Am unteren Ende der Prallflächen 41 sind ein Trichter 42 und unterhalb derselben ein Sammelgefäß 43 für gefangene Insekten vorgesehen. Erfindungsgemäß ist die in Fig. 3 gezeigte Insektenfalle 40 an einer, zwei, drei oder an allen vier Prallflächen 41 mit insektenspezifisch reflektierenden Flächen 9 ausgestattet. Dies können beispielsweise an jeder Seite streifenförmige insektenspezifisch reflektierende Platten sein. Es besteht auch die Möglichkeit, beidseits der Öffnungen 44 in den Prallflächen 41 der in Fig. 3 gezeigten Insektenfalle 40 Flächen 9 vorzusehen.

Auch bei der in Fig. 3 gezeigten Insektenfalle 40 kann die Quelle 10 für Strahlung (Licht) so angeordnet, ausgebildet, betrieben und mit Energie beaufschlagt sein, wie dies im Zusammenhang mit Fig. 1 beschrieben worden ist.

Auch die in Fig. 3 gezeigte Ausführungsform einer Insektenfalle 40 ist bevorzugt mit einem Botenstoff (Semiochemikalie, wie z.B. Pheromon) ausgestattet.

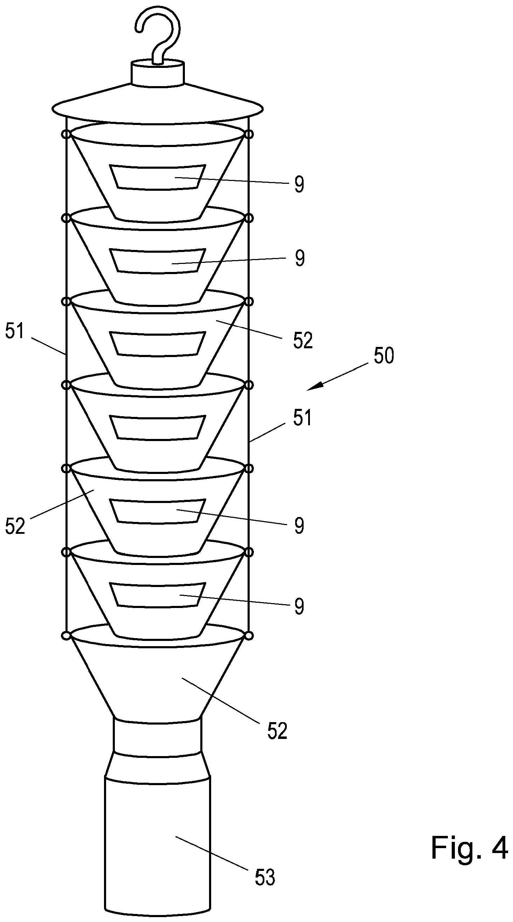

Fig. 4 zeigt eine erfindungsgemäße Anordnung mit einer Einrichtung, die als Segmenttrichterfalle 50 ausgebildet ist. Diese Falle 50 umfasst mehrere übereinander angeordnete und miteinander durch Schnüre 51 verbundene Trichter 52 und am unteren Ende einen Auffangbehälter 53 für gefangene Insekten.

In der in Fig. 4 gezeigten Segmenttrichterfalle 50 ist ein Botenstoff (Semiochemikalie, wie z.B. Pheromon) untergebracht.

Erfindungsgemäß sind insbesondere ringförmig ausgebildete Platten als insektenspezifisch reflektierende Flächen 9 an den oberen, weiteren Enden der Trichter 52 angeordnet.

Das Versorgen der Quellen 10 für elektromagnetische Strahlung (Licht) kann wie anhand von Fig. 1 beschrieben erfolgen. Im Übrigen kann bei der in Fig. 4 gezeigten Ausführungsform die Quelle 10 für Strahlung (Licht) so angeordnet, ausgebildet, betrieben und mit Energie beaufschlagt sein, wie dies im Zusammenhang mit Fig. 1 beschrieben worden ist.

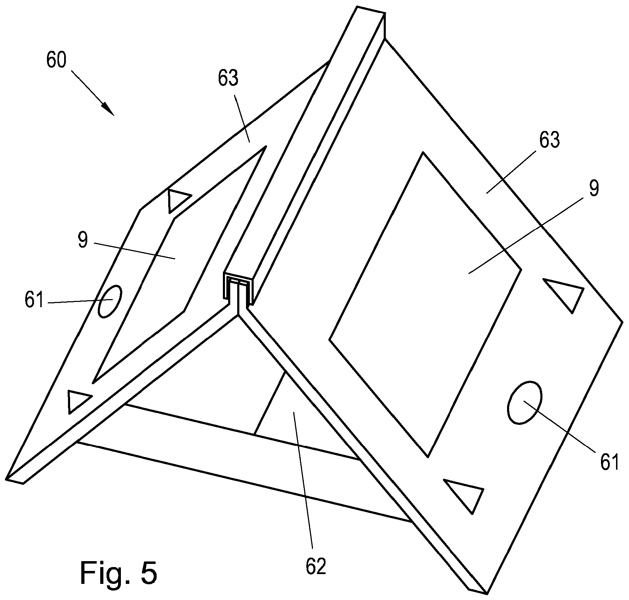

Die in Fig. 5 gezeigte Einrichtung ist eine als Klebefalle 60 ausgebildete Insektenfalle, die ein im Wesentlichen dreiseitiges Prisma 61 umfasst, wobei innerhalb des Prisma 61 ein Botenstoff (Semiochemikalie, wie z.B. Pheromon) vorgesehen ist und die Falle 60 einen Klebeboden 62 aufweist. Der fertig beleimte und austauschbare Klebeboden 62 hat zur Folge, dass Insekten (Falter oder Blattwespen) von dem gegebenenfalls vorhandenen Pheromon und von den durch die wegen insektenspezifischer Reflexion Insekten anlockenden Flächen 9 in die Falle 60 gelockt und von dem Klebeboden 62 gefangen werden.

Erfindungsgemäß ist an wenigstens einer, aber vorzugsweise an beiden nach oben weisenden Wänden 63 der in Fig. 5 gezeigten Insektenfalle 60 je wenigstens eine Fläche 9, insbesondere in Form wenigstens einer Platte, vorgesehen, welche Licht insektenspezifisch reflektiert.

Die Ausgestaltung und Art der Quellen 10 und deren Versorgung mit Energie kann so wie anhand von Fig. 1 beschrieben ausgeführt sein. Im Übrigen kann bei der in Fig. 5 gezeigten Ausführungsform die Quelle 10 für elektromagnetische Strahlung (Licht) so angeordnet, ausgebildet, betrieben und mit Energie beaufschlagt sein, wie dies im Zusammenhang mit Fig. 1 beschrieben worden ist.

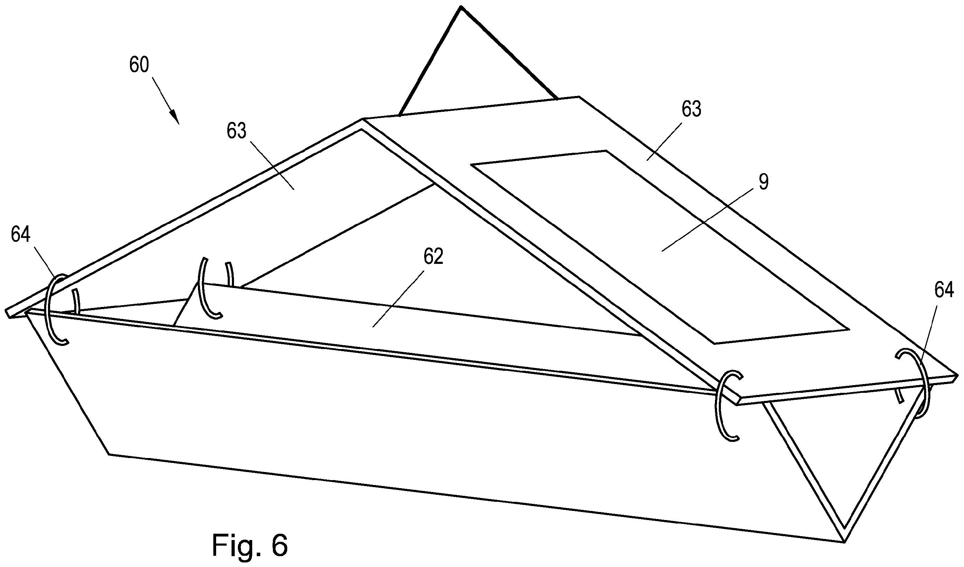

Die in Fig. 6 gezeigte Ausführungsform einer Flügelfalle-Klebefalle 60, die als Insektenfalle in einer erfindungsgemäßen Anordnung verwendet wird, ist ähnlich ausgebildet wie die Insektenfalle von Fig. 5. Bei der in Fig. 6 gezeigten Insektenfalle ist der Boden 62 gewinkelt ausgebildet und mit den unteren Rändern der Wände 63 durch Ringe 64, die Federringe sein können, verbunden. An den Wänden 63 sind insektenspezifisch reflektierende Flächen 9, z.B. in Form von Platten, vorgesehen. Im Übrigen ist die Flügelfalle-Klebefalle 60 von Fig. 6 so aufgebaut, wie dies vorstehend für die in Fig. 5 gezeigte Klebefalle 60 beschrieben worden ist. Im Übrigen kann bei der in Fig. 6 gezeigten Ausführungsform die Quelle 10 für elektromagnetische Strahlung (Licht) so angeordnet, ausgebildet, betrieben und mit Energie beaufschlagt sein, wie dies im Zusammenhang mit Fig. 1 und Fig. 5 beschrieben worden ist.

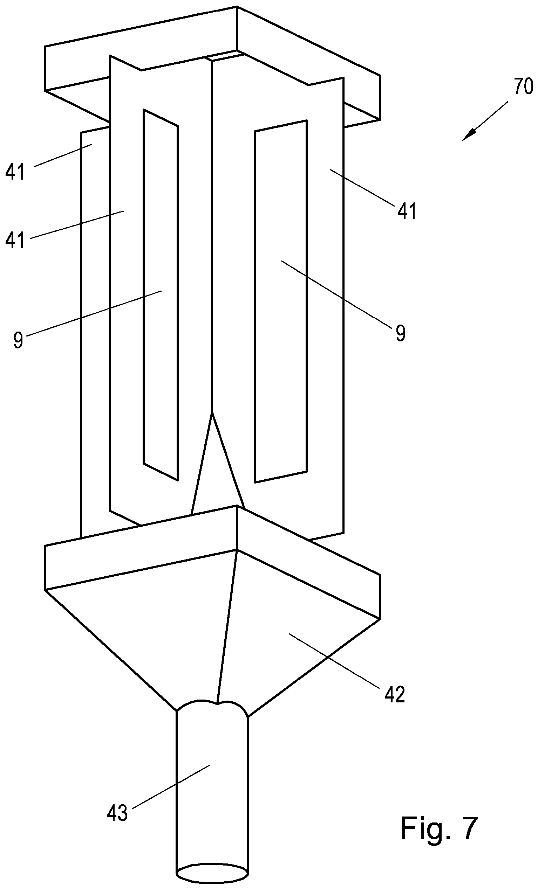

In Fig. 7 ist als Einrichtung der Erfindung eine Prallfalle 70 gezeigt. Die Prallfalle 70 weist vier sternförmig angeordnete Prallflächen 41 auf. Am unteren Ende der Prallflächen 41 ist ein Trichter 42 und unter diesem ein Sammelgefäß 43 vorgesehen, in das die gefangenen Insekten fallen. Wenigstens eine der Prallflächen 41 ist wenigstens eine insektenspezifisch reflektierende Fläche 9 (Platte). Im Übrigen kann bei der in Fig. 7 gezeigten Ausführungsform die Quelle 10 für elektromagnetische Strahlung (Licht) so ausgebildet, betrieben und mit Energie beaufschlagt sein, wie dies im Zusammenhang mit Fig. 1 beschrieben worden ist.

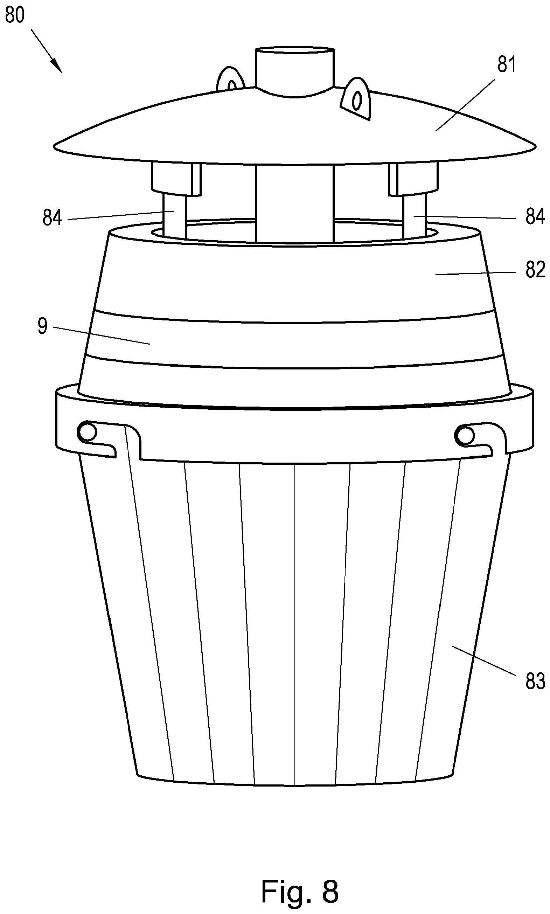

Bei der in Fig. 8 gezeigten Insektenfalle, die in einer erfindungsgemäßen Anordnung verwendet wird, handelt es sich um einen Fallenlampion 80 (auch Lampionfalle genannt). Der Fallenlampion 80 weist unter einem Schutzdach 81 einen nach oben offenen, sich nach unten hin konisch erweiternden Teil 82 und unterhalb desselben einen Sammelbehälter 83 für gefangene Insekten auf. Das Schutzdach 81 ist mit den anderen Teilen des Fallenlampions 80 über stabförmige Verbindungselemente 84 verbunden. An beliebigen Stellen des Fallenlampions 80 sind Flächen 9, die insektenspezifisch reflektierend sind, angebracht. Im Beispiel sind am Teil 82 ringförmige, reflektierende Flächen 9 (Platten) angeordnet. Im Übrigen kann bei der in Fig. 8 gezeigten Ausführungsform die Quelle 10 für elektromagnetische Strahlung (Licht) so angeordnet, ausgebildet, betrieben und mit Energie beaufschlagt sein, wie dies im Zusammenhang mit Fig. 1 beschrieben worden ist.

Das in Fig. 12 wiedergegebene Spektrum brachte gute Ergebnisse. Besonders das Material FIB-Hell (schwarze Kurve) besitzt ein ähnlich der Rinde verlaufendes Spektralmuster, jedoch ist die Farbe (beige) für Borkenkäfer atypisch. FIB_12 ist auch hinsichtlich der Farbgebung vorteilhaft. Die Spektralkurve zeigt einen ähnlichen Verlauf wie FIB-hell, kann jedoch noch optimiert werden. Für die Farbgebung wurden bei FIB 12 nur natürliche Farbstoffe verwendet.

Zusammenfassend kann ein Ausführungsbeispiel der Erfindung wie folgt beschrieben werden:
Eine Anordnung zum Anlocken von Insekten umfasst eine Insektenfalle, die mit einem Botenstoff (Semiochemikalie, wie z.B. Pheromon) bestückt ist. Die Insektenfalle weist wenigstens eine Reflexionsfläche auf, deren Reflexionsspektrum dem Reflexionsspektrum eines Wirtes der anzulockenden Insekten im Wesentlichen gleich ist.

## Patentansprüche

1. Anordnung mit einer Einrichtung (15) oder einer Insektenfalle (1, 40, 50, 60, 70, 80) zum Anlocken oder zum Anlocken und Töten von Insekten, umfassend eine Einrichtung (15) mit einem pyramidenförmigen Netz (6) oder eine Insektenfalle ausgewählt aus einer Gruppe bestehend aus Schlitzfalle (1), Borkenkäfer-Schlitzfalle, Trocken- oder Nass-Falle mit Prallflächen (40), Segmenttrichterfalle (50), Fallenlampion, Klebefalle (60), wie Klebefalle mit dreiseitigem Prisma und Flügelfalle, **dadurch gekennzeichnet, dass** die Einrichtung (15) oder die Insektenfalle (1, 40, 50, 60, 70, 80) wenigstens einen reflektierenden Bereich aufweist, der Sonnenlicht in einem Reflexionsspektrum reflektiert, das im Wesentlichen dem Reflexionsspektrum eines Wirtes von anzulockenden/zu tötenden Insekten entspricht.

2. Anordnung nach Anspruch 1, **dadurch gekennzeichnet, dass** der Bereich insektenspezifisch reflektierend ausgebildet ist.

3. Anordnung nach Anspruch 1 oder 2, **dadurch gekennzeichnet, dass** der Einrichtung (15) oder der Insektenfalle (1, 40, 50, 60, 70, 80) ein Botenstoff (Semiochemikalie, wie z.B. Pheromon) zugeordnet ist.

4. Anordnung nach einem der Ansprüche 1 bis 3, **dadurch gekennzeichnet, dass** der reflektierende Bereich der Einrichtung (15) oder der Insektenfalle (1, 40, 50, 60, 70, 80) von Platten gebildet ist.

5. Anordnung nach einem der Ansprüche 1 bis 4, **dadurch gekennzeichnet, dass** der Anordnung eine Quelle zugeordnet ist, die elektromagnetische Strahlung, insbesondere Licht, das Sonnenlicht im Wesentlichen entspricht, auf die Einrichtung (15) oder die Insektenfalle (1, 40, 50, 60, 70, 80) abgibt.

6. Anordnung nach Anspruch 5, **dadurch gekennzeichnet, dass** die elektromagnetische Strahlung auf den insektenspezifisch reflektierenden Bereich, insbesondere die Platten (9), gerichtet ist.

## Claims

1. Arrangement having a device (15) or an insect trap (1, 40, 50, 60, 70, 80) for attracting or for attracting and killing insects, comprising a device (15) having a pyramid-shaped net (6) or an insect trap selected from a group consisting of slit trap (1), bark beetle slit trap, dry or wet trap with baffles (40), segment funnel trap (50), trap lampion, sticky trap (60), such as sticky trap having three-sided prism and wing trap, **characterized in that** the device (15) or the insect trap (1, 40, 50, 60, 70, 80) has at least one reflective area that reflects sunlight in a reflection spectrum that substantially corresponds to the reflection spectrum of a host of insects to be attracted/killed.

2. Arrangement according to claim 1, **characterized in that** the area is designed to be reflective in an insect-specific manner.

3. Arrangement according to claim 1 or 2, **characterized in that** a messenger substance (semiochemical, such as pheromone) is associated with the device (15) or the insect trap (1, 40, 50, 60, 70, 80).

4. Arrangement according to one of claims 1 to 3, **characterized in that** the reflective area of the device (15) or of the insect trap (1, 40, 50, 60, 70, 80) is formed by plates.

5. Arrangement according to one of claims 1 to 4, **characterized in that** the arrangement is associated with a source which emits electromagnetic radiation, in particular light, substantially corresponding to sunlight, onto the device (15) or the insect trap (1, 40, 50, 60, 70, 80).

6. Arrangement according to claim 5, **characterized in that** the electromagnetic radiation is directed towards the insect-specific reflective area, in particular the plates (9).

## Revendications

1. Dispositif avec une installation (15) ou un piège à insectes (1, 40, 50, 60, 70, 80) pour attirer ou pour attirer et tuer des insectes, comprenant une installation (15) avec un filet pyramidal (6) ou un piège à insectes choisi dans un groupe comprenant un piège à fentes (1), un piège à fentes à scolytes, un piège sec ou mouille à surfaces d'interception (40), un piège à entonnoirs (50), une lanterne-piège, un piège englué (60), tel qu'un piège englué delta et un piège à ailettes, **caractérisé en ce que** l'installation (15) ou le piège à insectes (1, 40, 50, 60, 70, 80) présente au moins une zone réfléchissante qui reflète la lumière solaire dans un spectre de réflexion correspondant pour l'essentiel au spectre de réflexion d'un hôte des insectes à attirer et/ou à tuer.

2. Dispositif selon la revendication 1, **caractérisé en ce que** la zone est conçue pour être réfléchissante d'une façon spécifique pour l'insecte.

3. Dispositif selon la revendication 1 ou 2, **caractérisé en ce que** l'installation (15) ou le piège à insectes (1, 40, 50, 60, 70, 80) est associé à une molécule de signal (substance sémiochimique, par ex. une phéromone).

4. Dispositif selon l'une des revendications 1 à 3, **caractérisé en ce que** la zone réfléchissante de l'installation (15) ou du piège à insectes (1, 40, 50, 60, 70, 80) est formée par des plaques.

5. Dispositif selon l'une des revendications 1 à 4, **caractérisé en ce qu'**il est associé à une source émettant un rayonnement électromagnétique, en particulier une lumière correspondant sensiblement à la lumière solaire, vers l'installation (15) ou le piège à insectes (1, 40, 50, 60, 70, 80).

6. Dispositif selon la revendication 5, **caractérisé en ce que** le rayonnement électromagnétique est dirigé vers la zone réfléchissante spécifique pour l'insecte, en particulier vers les plaques (9).
